# EUROPEAN PATENT SPECIFICATION

(11) **EP 3 560 222 B1**
(45) Date of publication and mention of the grant of the patent: **15.06.2022**
(21) Application number: 16877886.8
(22) Date of filing: 22.12.2016
(51) Int. Cl.: H04W 4/16, H04M 3/42, H04M 3/493, H04M 15/00, H04M 17/00, H04W 4/14, H04W 4/60, H04W 4/24

(54) **A METHOD FOR AUGMENTING EXISTING CALL-COMPLETION SOLUTIONS**
VERFAHREN ZUR ERWEITERUNG BESTEHENDER ANRUFBEENDIGUNGSLÖSUNGEN
PROCÉDÉ POUR AUGMENTER DES SOLUTIONS D'ACHÈVEMENT D'APPEL EXISTANTES

(43) Date of publication of application: 30.10.2019
(73) Proprietor: Mahdi, Ali, Toronto, Ontario M4M 2K3 (CA)
(72) Inventor: Mahdi, Ali, Toronto, Ontario M4M 2K3 (CA)
(74) Representative: Monteiro Alves, Inês
(86) International application number: PCT/IB2016/057938
(87) International publication number: WO 2017/109748

(56) References cited:
- EP-A1- 2 282 495
- WO-A1-2008/013437
- US-A1- 2006 104 429
- US-A1- 2006 104 429
- US-A1- 2006 178 135
- US-A1- 2015 201 313
- Anonymous: "Pre-Paid Balance Support", What most people want to know about: Pre-paid, 31 January 2014 (2014-01-31), XP009515351, Retrieved from the Internet: URL:https://web.archive.org/web/2015022418 0410/http://www.telemgroup.sx/prepaidbalan ce [retrieved on 2017-04-11]

## Description

### FIELD OF THE INVENTION

The present invention relates generally to Telecommunications, and especially to Call Completion Solutions within Mobile Communications.

### BACKGROUND OF THE INVENTION

Call-Completion solutions implemented by Mobile Network Operators (MNOs) address the issue of minimizing the impact that subscriber unavailability and insolvency have on MNO revenue and on subscriber experience. A Called (or a B-Party) subscriber may not be available due to various reasons including Mobile handset being switched off, Mobile Handset being outside of network coverage area, Mobile Handset being busy on another call, Mobile Handset being unreachable, etc. A Calling (or an A-Party) Subscriber is said to be insolvent when he/she does not have sufficient credit to make an outgoing call.

From the MNOs' perspective, addressing these issues is of vital importance because Subscriber unavailability and insolvency have a direct impact on intended airtime usage by subscribers and therefore, on the MNO realizing potential revenue opportunities.

From the subscriber's perspective, innovative solutions offered to them by their MNO to help them establish contact with those who they wish to contact and visa-versa, even when unavailability and insolvency may be persisting, are clear value-added services resulting in increased customer satisfaction and loyalty.

There are several Call-Completion solutions available today which have been adopted by various MNOs. Some of the more popular and effective of these solutions are listed below. It should be noted that the titles of the solutions listed below are names that are typically used by MNOs and the industry and are not necessarily reflective of any patent titles or specific product names as registered or offered by any particular Network Equipment Vendor or MNO.

Missed Call Notification (MCN): The MCN is a service where in response to a given A-Party's failed Call Attempt to a given B-Party due to subscriber unavailability (B-Party Line Busy, B-Party Mobile Handset Switched Off, B-Party Mobile Handset Out-of-coverage, etc) the Mobile Network (not the subscriber) performs the following actions on behalf of the A-Party subscriber:
- Detects the failed call attempt and records the A-Party Number, B-Party Number and Date/Time of the Failed Call Attempt;
- Detects when the B-Party become available again; and
- Formulates and Sends an SMS Message to the B-Party listing (in the content of the SMS) the A-Party Number and Date and Time of Failed Call Attempt.

Availability Notification: If this service is implemented, it works in tandem with the MCN Service as follows:
- Once Steps 1 to 2 of the methodology of the MCN service described above have occurred, in parallel with Step 3, the network will also send an SMS to the A-Party informing him/her that the B-Party has become available.

'Call-Me' SMS Service: This service provides a facility where the A-Party who is (typically) an insolvent prepaid subscriber (unable to make an outbound call or send an SMS due to insufficient credit) can request that the network sends an SMS (on his/her behalf, often free of charge) to a given B-Party (with whom they wish to establish contact), requesting that they contact them. The network will formulate and send an SMS to the B-Party, the content of which contains the number of the A-Party along with a text informing them that the A-Party has requested that they call them back. The procedure that the A-Party must execute in order to request that the network sends a 'Call-Me' SMS on his/her behalf is typically one of the following 3:
- Typing (using the phone's numeric keypad) a USSD string consisting of a designated code and the number of the intended B-Party, and ending with the hash/pound sign (e.g ^{∗}111^{∗}<B-Party Number> #);
- Sending an SMS to a designated network number (e.g 12345) with the B-Party number in the SMS content; and
- Entering a specific code in order to launch a menu that would offer the user an option to only enter the number of the B-Party subscriber to whom they wish to either send a 'Call Me' SMS

'Collect Call' Service: This service provides a facility where the A-Party who is (typically) an insolvent prepaid subscriber (unable to make an outbound call or send an SMS due to insufficient credit) can request that the network establishes a Voice Call between him/her and an intended B-Party (with whom they wish to establish contact), presenting the B-Party with the option to 'accept' or 'reject' the charges of the call. While different MNOs implement different methods for subscribers to initiate this service, all methods require that (in addition to other symbols and/or numbers) the subscriber manually enters the number (similar to the 'Call-Me' Service) of the B-Party Subscriber to whom they wish to make a 'Collect Call'.

Missed-Call Service: Not relevant to the context of the present invention.

Call-Waiting: Not relevant to the context of the present invention.

Voice Mail Service: Not relevant to the context of the present invention.

Each of the methods listed above has its own limitations and MNOs typically deploy a combination of these solutions given that no one solution can be a complete substitute of all the other solutions. The present invention aims to affect improvement and address the following limitations:
*Limitation 1: Lack of an easy and quick facility for a given subscriber to initiate a Call-Completion service (e.g 'Call-Me' SMS or a 'Collect Call') to another subscriber:*
The procedure that the A-Party must execute in order to request for the network to send a 'Call-Me' SMS on his/her behalf or initiate a 'Collect Call' is typically one of the following:
- Typing (using the phone's numeric keypad) a USSD string consisting of a designated code and the number of the intended B-Party, and ending with the hash/pound sign (e.g ^{∗}111^{∗}<B-Party Number>#). This is the most typical method used by MNOs, hence the rest of this document will reference this method.
- Sending an SMS to a designated network number (e.g 12345) with the B-Party number in the SMS content
- Entering a specific code or manually launching the SIM STK menu to be provided with the option to only enter the number of the B-Party subscriber (to whom they wish to either send a 'Call Me' SMS or a 'Collect Call')
- Other variations performing similar functions

There are 2 main issues with the above existing methods:
- All subscribers need to be explicitly aware (through marketing, or other means) that these methods exists and how to use them
- None of these methods is by any means something that can be referred to as simple or user-friendly and requires that the subscriber memorizes and manually enters the number of the B-Party to whom they wish to send a 'Call-Me' SMS or a 'Collect Call'.

*Limitation 2: The inferior alerting power of SMS-Based Solutions (in catalyzing a Call-Back) as compared to an incoming call, and the lack of an easy call-back mechanism which can deliver ease, convenience and the power of suggestion by automatically prompting the subscriber to call the other party back:*
Data has shown that the response of subscribers to an incoming call is far more urgent than to SMSs. Additionally, due to an increase in the amount of marketing SMSs coupled with the increased usage of OTT (Over-The-Top)- based messaging smartphone Apps, has reduced the urgency with which subscribers respond to incoming SMSs over the recent years. Additionally, an incoming SMS does not provide a mechanism to prompt the subscriber to automatically call the other party (from whom a Call-Completion SMS was received) back. Often, more than several steps are required for the subscriber to open the SMS and initiate a call-back. One typically tedious scenario which many handsets present their users is as follows:
- Unlock the handset screen
- Open the SMS inbox
- Open the SMS
- Click on an 'options' menu related to that SMS
- Choose 'Call'

While the above-mentioned limitations can apply to many products offered by various MNOs (some of which may not have even been incepted yet but may suffer from the same limitations when they are invented and adopted by MNOs) and that the present invention can be used to resolve similar limitations for all such products; for the sake of simplicity (and not limiting the utility of the present invention), the following products will be referenced in the context of the present invention for clearly illustrating its underlying design and methods:
- Availability Notification;
- Call-Me SMS Service;
- Collect Call Service.

The present invention resolves the issues discussed above by utilizing a Software Application installed on the SIM card (often referred to as a SIM ToolKit or an STK Applet) along with minor (and very typical) configuration changes in the core network (without the addition of any new core network equipment) in order to provide the required added functionality to the existing Call-Completion methods. This has the added advantage of keeping the existing network infrastructure as is and resolving the issues without the added expenses of deploying new Hardware and major configuration changes in the Mobile Network.

### Background Information:

The Subscriber Identity Module (or SIM Card) is actually a complete computer system consisting of a Processor, an Operating System, and various types of Memory/Storage SIM Application Toolkit (commonly referred to as STK) is a standard of the GSM system which enables the Subscriber Identity Module (SIM) to initiate actions which can be used for various value-added services.

The SIM Application Toolkit consists of a set of commands programmed into the SIM which define how the SIM should interact directly with the outside world and initiates commands independently of the handset and the network. This enables the SIM to build up an interactive exchange between a network application and the end user and access, or control access to, the network. The SIM also gives commands to the handset such as displaying menus and/or asking for user input.

STK has been deployed by many mobile operators around the world for many applications, often where a menu-based approach is required, such as Mobile Banking and content browsing, however its capabilities are far more extensive than what is typically being used. STK allows for such functions as:
- Detecting Mobile Originating (MO) and Mobile Terminating (MT) calls and performing subsequent actions based the number to/from which the call is being made; when the call is answered, and when the call is disconnected
- Analyzing the reason for a call being disconnected (i.e Normal Release initiated by A or B Party, Subscriber Busy, No Answer, various Network related failures, etc) and being programmed to perform other subsequent actions as a result (e.g Popping up a message or a menu to provide the subscriber with further information or choices for further actions (e.g Call- back, Send SMS, etc)
- Sending an SMS either to a network application or to another subscriber. Operators can even trigger an STK application to initiate an SMS or USSD session without the subscriber's knowledge. They can do this by sending a 'Class 2 SMS' (SMS intended strictly for the SIM and not visible to the subscriber) which an STK applet deployed on to the SIMs of that operator has been programed to understand and to perform subsequent tasks such as query the handset's current location and the received RF (Radio Frequency) signal level and to report it back to the network for analysis, troubleshooting and optimization.
- Initiating an outbound call to a particular number. The subscriber is always prompted for this action, however a customized message can be displayed to the user via this prompt such as "Missed-Call from <Number>; would you like to call this number back?" which upon subscriber's validation will automatically trigger the handset to make an MO call to the particular number.
- Building Peer-to-Peer applications where 2 SIM STK Applets can communicate with one another via Class 2 SMSs without the subscriber being aware that these SMSs are being sent.
- Vast number of other functions.

In GSM 2G networks, the SIM Application Toolkit is defined by the GSM 11.14 standard released in 1995. From release 4 onwards, GSM 11.14 was replaced by 3GPP 31.111 which also includes the specifications of the USIM Application Toolkit (USAT) for 3G networks. The present invention is Applicable to both standards but for the purposes of this document the terms Sim ToolKit, STK, and SIM will be used representing the relevant standards for the SIM and the USIM.

While there could be claims that the functions described in the current invention can be achieved using Mobile Operating System based Apps (e.g on Android, iOS, etc) there are major limitations with this approach and hence major advantages in using STK as the platform for the invention:
- All Mobile Handsets (irrespective of manufacturer, operating system, etc) support STK Applets. Obviously not all handset support iOS, Android and Microsoft Apps and there is a vast variety of other operating systems residing in handsets. STK is handset and network independent.
- Given that the SIM card is actually a property of the Mobile Network Operator (MNO), the MNO has the authority to deploy whatever functionality (using STK Applets) on all its SIMs (as long as it is approved by the MNO's country's telecommunication regulatory authority) without the subscriber even being aware of this and the operator does this through what is called the 'Over-The-Air' (or OTA) Platform. This is not the case with iOS, Android, and Microsoft Apps and the MNO cannot force an 'App' onto these Operating Systems as all 'App' installations require the Subscriber's consent (making mass deployment of new functionality extremely difficult and impractical)
- An STK Applet can be triggered (or activated to perform its intended functions) by several events including Manual launch of the Application by the user from the SIM Applications menu, Mobile Originating (Outgoing) Call Attempt, Mobile Terminating (Incoming) Call, Mobile Originating SMS, and others. It is important to note that in order for a Mobile Terminating (or Incoming) SMS to trigger (or activate) an STK Applet, the SMS must be a 'Class 2' SMS.

This means that the STK-based methods described in the present invention (especially due to the fact that STK is a highly scarce technical specialty and skillset) makes these methods very non-trivial and unique.

Due to this fact, some documents of the state of the art already use STK-based methods to detect failed calls.

Document US 2006/178135 A1 describes a method by which an application (STK-based or other) can keep track of a user's missed-calls by the implementation and integration of additional customized hardware (denoted as the "ReturnCallServer").

Differently from the present invention, which acts immediately on failed mobile originating (MO) calls due to specific failure reasons, the invention disclosed in the US application captures and stores failed (missed) mobile terminating (MT).

Also, in the document of the prior art, the user manually accesses a set of menus in order to establish contact with those parties from whom calls were missed, while the present invention automatically and immediately presents the user with the relevant STK menu.

Document US 2015/201313 A1 aims to use an STK applet to capture failed outgoing (MO; mobile originating) for any reason to provide the calling party the option to send a pre-defined message directly to the called party.

The present invention, in the other hand, uses an STK applet not only to detect a failed mobile originating call, but to further determine the cause of the failure (i.e insufficient credit or B-Party unavailable) based on which it will either do nothing, or present a different set of menus containing various call completion options offered by the Mobile Network Operator related to the reason of the call failure.

Document US 2006/104429 A1 has the objective to provide for generation of a more complete call completion service. However, it does not achieve its results via an autonomous STK applet and requires either the introduction of additional hardware or embedding additional functionality within existing network nodes to be able to provide the subscriber with a menu of call completion options.

Additionally, the document of the prior art does not disclose a method in achieving one of the present invention's main objectives, namely, the detection of calls failed due to insufficient credit. The only failure causes discussed consistently within the document are "busy; not answering; and not reachable".

Document EP 2 282 495 A1 simply describes a generic method to enable launching an STK application by means of dialing a number. The method described relies on an external "central management unit" provisioned to receive calls on specific numbers such that, when calls to this unit are terminated, an STK application is triggered and launched.

The invention disclosed in the European application does not apply to the detection of calls made to a complete range of numbers not terminating in a "central management unit" (e.g calls made to regular subscribers) and simply relies on the "call-disconnected event" in order to launch the STK application.

### SUMMARY OF THE INVENTION

The present invention is defined by the claims. Any subject-matter falling outside the scope of the claims is provided for information purposes only.

The present invention (being a software application installed on the SIM which from here forth will be referred to as 'the Applet') complemented with a method consisting of simple modifications made to the Mobile Network Operator's standard configurations, aims to resolve the following limitations with existing methods:
- Lack of an easy Call-Back mechanism in response to Call-Completion SMSs
- Lack of an easy way to initiate various Call Completion products requiring a USSD code or a special SMS to be issued by the subscriber
- Inferior alerting power of SMS-based solutions as compared with the urgency conveyed by an incoming call (especially as the usage of SMS is on the decline due to an influx of marketing SMSs and the usage of OTT-based messaging Apps) will in brief, function as follows:
   *For easy facilitation of initiating various Call-Completion services offered by the MNO (e.g sending a 'Call-Me' SMS, or initiating a 'Collect Call' towards the B-Party):*
   The Applet will be automatically triggered by a Mobile Originating (Outgoing) call which has been terminated according to specific conditions predefined by the MNO (e.g a call destined for another subscriber belonging to the same MNO, terminated due to calling subscriber insolvency/insufficient credit). To enable an STK applet to be triggered by a Mobile Originating (MO) Call, the STK 'CALL CONTROL' function shall be used. Once the MO call is detected by CALL CONTROL, the 2 EVENT DOWNLOADS: Call Connected and Call Disconnected Events will be set by the applet. Upon the Call Connected Event being triggered, a 'Call Answered' flag can be set. Upon the Call Disconnected event, the 'Release Cause' shall be recorded.

Upon being triggered by the provisioned condition, the Applet will provide an on-screen menu to the user with several options including 'Send a Call-Me SMS' and 'Make a Collect Call', which upon selecting will trigger the Applet to automatically execute the MNO's relevant procedure (SMS, USSD, etc) for sending a 'Call-Me' SMS, making a 'Collect Call' to the B-Party; This shall be achieved either by the SEND SHORT MESSAGE or SEND SS or SEND USSD proactive STK commands (depending on the particular network's configuration and chosen method for initiating the required Call-Completion Service).

Alternatively, the user can launch the Applet manually from the SIM Applications menu (available in all Mobile Handsets) or by dialing an allocated short code (e.g 555) and be presented with a list of 'Last Received Calls' and 'Last-dialed' numbers to which he/she can initiate a 'Call-Me' SMS or a 'Collect Call' without having to type any particular code (USSD, dialing cod) or initiating an SMS to a network number (e.g 12345) or having to type in the B-Party number. These ('Last Dialed' and 'Last Received') numbers (resulting from MO and MT calls) shall be captured using the CALL CONTROL function (for MO Calls) and the 'MT Call Event', (being a part of the EVENT DOWNLOAD, and set using the SET UP EVENT LIST command) for MT calls, and stored in the SIM's program memory. The short code method (i.e dialing 555 and instead of having an actual MO call to 555 being made, a menu is presented) is achieved by using the CALL CONTROL function with CALL CONTROL result (sent by the SIM to the handset) being set to 'Not Allowed' and then launching the menu automatically by using the SET UP MENU proactive command.

The question of why is the Applet storing the list of 'Last Dialed' and 'Last Received' numbers in its memory and not utilizing this information that is already also being stored in the handset may often arise. The answer to such a question is as follows: The only way an STK applet can access the handset's 'Call Logs' is by issuing what is referred to as 'AT' (short for Attention) commands; (defined in the 3GPP 27.007 Technical Specification) to the handset. Within the AT commands set there are a series of 'Phone Book' commands (CPBS, CPBF, CPBR, and CPBW) which provide access to the handsets Phone Book, and Call Logs (Incoming, outgoing, and missed Calls) which can be queried by various entities such as an Application installed on the handset's operating System, an external device physically connected to the handset via a terminal port (e.g RS232, USB, etc) and (as per relevant standards) by an STK applet. In practice however, well over 99% of mobile handsets do not allow an STK applet to issue AT commands to it. The reason for this major limitation (which is evident through each handset's 'Terminal Profile' indicating to what extent it supports various STK functions) is not clear and not in the context of the present invention. The limitations and difficulties involved with attempting to deliver the functionality described in the present invention using an Operating System-Based App (e.g iOS, Android, etc) as detailed in previous sections of this document, or by attempting to use the AT Commands approach will simply not yield practical, deployable results, making the STK approach outlined in the present invention the only viable way of achieving the goals set forth in this document.

*For enhancing the Alerting power of the Call-Me SMS and Availability Notification SMS while enabling an automatic call-back mechanism:*
The MNO shall (using its existing IVR) configure 2 outbound IVR profiles which when triggered (possible trigger methods detailed further below), will make an outbound call to a requested B-Party number, from a requested A- Party CLI (Caller Line Identification). One of the IVR profiles will have an announcement appropriate for the Call-Me SMS service (which after this transformation/enhancement shall be referred to simply as the 'Call-Me Service') such as *"You have a Call-Back Request. For details and to automatically call this number back, please refer to the pop-up message appearing on your mobile screen"* and one appropriate for the Availability Notification service such as *"The party you tried to reach earlier, is now available. For details and to automatically call this number back, please refer to the pop-up message appearing on your mobile screen".* In both cases the announcement shall be played once the outbound IVR call is answered by the B-Party and will automatically disconnect at the end of the announcement.

The Call-Me SMS is typically configured as a service in the USSD gateway to either directly send an SMS to the B-Party number (listed in the USSD string, e.g ^{∗}111^{∗}<B-Party Number># issued by the A-Party handset) or to instruct the SMSC (Short Message Service Center) to send this SMS (which can be predefined as an 'SMS template') to the B-Party number from the A-Party CLI or another variation specific to the MNO which is out of the scope of the present invention. The USSD gateway typically being a very versatile platform (with centralize connectivity to the main core network elements such as the IN/Billing System, HLR, SMSC, etc) for customized application development by the MNO, can have its configuration modified to now trigger the Call-Me Service IVR profile (described above) to make an outbound call to the B-Party from the A-Party CLI (instead of sending an SMS).

Given however that the STK applet residing on the B-Party handset which receives the IVR call requires some way of knowing that this call (which is coming from a regular CLI; namely the A-Party CLI) is actually coming from an IVR as part of the Call-Me service, the following methods can be used:
- If the IVR (and the MNOs network configuration) support ISDN Sub-Addressing, the outbound IVR call can have the ISDN Sub-Address of the outbound call (which the STK applet will be able to observe, but is invisible to the subscriber receiving the IVR call) be set to a unique value (e.g "55555"). The STK applet shall be programmed to examine the Sub-Address field of every MT Call (using the MT Call Event), and if this value matches the predefined unique value (i.e 55555), it shall know that this is a "Call Me" IVR call.
- If the IVR (or the MNOs network configuration) do not support ISDN Sub-Addressing, the A-Party CLI can have one or several zeros added as a prefix to the A-Party CLI. Having extra zeros in the beginning of a CLI still allows all mobile handsets to be able to associate that CLI with its corresponding Address book entry (in case the number has been saved in the handset or SIM address books) and the name of the person associated with that CLI will indeed be displayed by the handset (even though there are a set of leading zeros added) ensuring optimal user experience. From the STK applet perspective however, the leading zeros at the beginning of the number will trigger the Applet to understand that this is not a regular call from a subscriber, but it is a 'Call Me' IVR call. The number of leading zeros can be used to distinguish the type of IVR call being received (e.g one zero indicates Call Me IVR call, while 3 leading zeros indicate an Availability Notification IVR call.

If however neither of the above 2 methods are possible (or preferred by the MNO) the following alternative method can be used:
- The header of the (existing) Call Me SMS Template shall be modified to have its Data Coding Scheme (DCS) set to a 'Class 2' SMS (intended for the SIM).
- A new USSD code shall be configured in the USSD gateway (e.g ^{∗}222^{∗}<A-Party Number>) which when issued by the B-Party handset will trigger the 'Call Me' IVR profile to make an outbound IVR call back to the B-Party (having issued the USSD code) but from the A-Party CLI (listed in the USSD string).
- The STK Applet shall be programmed to issue the new USSD code (i.e ^{∗}222^{∗}<A-Party Number>) upon receiving the Call Me SMS (which is no longer visible to the subscriber given that it has been modified to a Class 2 SMS intended for the SIM STK Applet). This is essentially the B-Party SIM instructing the IVR to call it from the A-Party CLI.
- Expecting an incoming call from the A-Party CLI, the B-Party SIM STK applet (having issued the USSD command itself), will now be triggered once an MT (IVR) call from the A-Party CLI is received. Upon the call being connected (i.e answered), the STK Applet will automatically issue the "SETUP CALL" proactive command with the "Command details tag" set to '04' (set up call, disconnecting all other calls (if any)) and 'Alpha Identifier' set to something like *"Call back request from* <*A-Number*>*. Would you like to call now?".* From the user's (i.e B-Party) perspective the following will have been experienced:
   - An incoming call from the A-Party CLI (having issued the original Call-Me Request) is received
   - When he/she answers the call, the IVR announcement is heard: *"You have a Call-Back Request. For details and to automatically call this number back, please refer to the pop- up message appearing on your mobile screen"*
   - When the user refers to his/her mobile screen he/she will see a message having popped-up: *"Call back request from <A- Number>. Would you like to call back now?"* with "Yes/No" options (or Accept/Reject, or another variation, as this is purely specific to the handset).
   - If the user chooses "Yes" (or "Accept", "OK", etc depending on the handset), the IVR call is immediately released (if not already released after having played the announcement) by the STK applet and a new call is automatically made to the A-Party number
   - If the user chooses "No" the message disappears and the IVR call will disconnect after the announcement has finished playing (if not already disconnected after having played the announcement)
   - A common question that may arise at this point is as follows: If an outbound IVR call is being made, why are the choices for the B-party (having received and answered the IVR call) to call the A-Party back not provided by IVR prompts (i.e IVR audio segment: "to call this party back please press 1") instead of an STK-based prompt triggering the handset to make an outbound call? This is in fact on of the most novel and non-obvious aspects of the present invention. In order for an IVR platform to achieve this 'Call-back' mechanism, several complex processes must take place such as:
      - The IVR keeps the call with B-Party in tact while it initiates another call with the A-Party in parallel while putting the B-Party on-hold
      - Upon the call being answered by the A-Party;
      - The 2 (separate) calls being managed by the IVR now have to somehow be linked while the IVR somehow releases itself from both
      - The IVR now has to perform complex communications with the Intelligent Network (IN) or Billing System to instruct it to initiate a call session and to charge the call to the B-Party account (an extremely complex and non-trivial process)

This complex process is in fact what most Collect-Call platforms are performing and this is one reasons why Collect Call platforms are actually quite complicated (in integrating into the Mobile Core Network) and require the deployment of significant hardware. The present invention not only enhances the functionality of the Call-Me SMS solution, but it is in effect transforming it into an actual Collect-Call service but without the need to deploy any additional hardware into the network making it an extremely simple and cost-effective alternative which most importantly is being embedded into the existing network architecture requiring minimal amount of maintenance. The present invention does not require a mechanism to instruct the IN/Billing System to charge the call to the B-Party account, simply because it is utilizing the B-Party handset to make the outbound call, meaning that B-Party will be the one paying for the call.

Similar to the Call Me service, for the availability notification, the relevant platform (either the MCN platform or the SMSC) which is currently configured to send an SMS to the A-Party when the B-Party becomes available, shall now have its configuration modified to trigger the Availability Notification Service IVR profile to make an outbound call to the A-Party from the B-Party CLI (instead of sending an SMS).

Depending on the capabilities of the particular platform(s) being used by the MNO, very similar implementation options to the 'Call Me' service described above can be provisioned (i.e ISDN Sub-Addressing, leading zeros, or the Availability Notification SMS format being changed to a class 2, triggering (this time) the A-Party SIM to instruct the IVR to call it, etc) which due to the extremely similar nature will not be detailed here and all future details, examples and embodiments will also only be in reference to the Call-Me Service.

Altogether it is critical to note while there is a possibility that some of the features/solutions/methods offered in the present invention may in some form be offered by existing methods/patents, none of the existing methods use a software application on the SIM (i.e STK) offering unmatched versatility

Mobile Network Operators (MNOs) would obtain and deploy the present invention onto the SIM cards (new and existing/operational) in their network and perform the standard configuration changes required.

The present invention provides subscribers an improved experience with existing Call-Completion products provided to them by their MNO.

STK being a tool that has been typically used for basic menu-driven value-added services mostly providing subscribers with basic information is typically not looked to by MNOs when trying to address limitations with 'Core Network'-related products. MNOs typically focus their attention on the 'Core Network' in order to find solutions to existing problems. As such, only a small subset of MNO's personnel are aware of all the powerful capabilities that are available with STK whom are usually not consulted when marketing and Core Network personnel engage in brain-storming sessions to resolve existing issues.

Other objects, features, and advantages of the present invention will be readily appreciated from the following description. The description makes reference to the accompanying drawings, which are provided for illustration of the preferred embodiment. However, such embodiments do not represent the full scope of the present invention.

### BRIEF DESCRIPTION OF THE DRAWINGS

Embodiments herein will hereinafter be described in conjunction with the appended drawings provided to illustrate and not to limit the scope of the claims, wherein like designations denote like elements, and in which:
FIG. 1 shows a schematic diagram for an applet triggered by outgoing call;
FIG. 2 shows a schematic diagram for an applet triggered manually by a user;
FIG. 3 shows sample configuration scenarios for automatically presenting the subscriber with options for sending a 'Call Me' SMS or making a 'Collect Call', following a failed out-going call attempt; and
FIG. 4 shows a method for transforming the Call-Me SMS into an IVR based Call-Me notification service with automatic prompt for call-back

### DETAILED DESCRIPTION OF PREFERRED EMBODIMENTS

The detailed functionality of the present invention (organized amongst the 2 Main areas of enhancement it offers) is as follows:
*Enhancement1: Lack of an easy way to initiate a 'Call-Me' SMS or a 'Collect Call':*
In order for a subscriber to initiate a 'Call-Me' SMS or a 'Collect Call' to a given B-Party subscriber without having to manually type-in a code and a B-Party number, the App can be triggered in 3 ways:

### - Method 1: Automatic Detection:

In order to provide the subscriber with a simple, one-touch facility for initiating a 'Call-Me' SMS or a 'Collect Call', the Applet can be configured (based on a variety of customizable conditions as per the MNO's requirements and network configuration) to be triggered when it detects a call attempt followed by a call termination (which can be strictly due to subscriber insolvency/insufficient credit or due to other reasons such as B-Party unavailable, etc. based on the MNO's requirements). The configurable parameters based on which the Applet will be triggered to provide the subscriber (through a Pop-up on-screen menu) options for further actions are as follows:
- 'Destination Network': This parameter indicates what network the call attempt is intended for; meaning does the B-Party subscriber also belong to the MNO's 'Own Network' or whether it is a subscriber belonging to another network including another MNO in the country ('MNO1', MNO2', 'MNO3', etc.), a Landline/Fixed Line operator, or an International Network. This can be relevant because a given MNO may want the Applet triggered only if the B-Party is a subscriber belonging to its own network. The Applet can be programed to distinguish the various networks through the prefix of the MO call (as captured by the CALL CONTROL STK function)
- 'Release Cause': This is the most critical parameter which is based on the ISUP (ISDN User Part) standard 'release causes' (indicating the reason for the termination of a particular call). These release causes are made available to the Applet through the 'Cause Information Element' defined in the '3GPP TS 04.08' standard. The most common release causes are 'Normal Call Clearing', 'User Busy, 'Destination Our-of-Order', 'User Alerting, No Answer', and 'Normal Unspecified'. Very often, MNOs network configuration is such that when a call is disconnected by the network due to subscriber insolvency/insufficient credit (as controlled by the IN or another type of Charging Node/Platform/On-line Billing System/Converged Billing System/etc.), the release cause conveyed back (and subsequently received by the Applet) is the 'Normal Unspecified' release cause. As such, a particular MNO may (for instance) want the Applet triggered when its prepaid subscribers are attempting to call other subscribers also belonging to its own network and only under the condition where their call attempt has failed due to insufficient credit (being reflected by the receipt of the 'Normal Unspecified' release cause from the network). The release cause is captured by setting the 'Call Disconnected Event' (part of the EVENT DOWNLOAD functionality using the SETUP EVENT LIST proactive command) which when triggered offers the release cause through the 'Cause' information element.
- 'User Has Credit?': An alternative way of ensuring that the menu is presented based on call attempts failing only due to subscriber insolvency/insufficient credit, especially if the release Cause method is not reliable in a given network (for instance if a particular MNO's configuration is such that the 'Normal Unspecified' release cause is being used for multiple conditions and not just disconnect due to insolvency/insufficient credit), is to utilize (if implemented) the MNOs automatically sent 'Credit Balance Notification' SMSs. The presence of such notifications (but in a Class 2 SMS format) will allow the Applet to always know the insolvency status of the subscriber when deciding if/when to react to/be triggered by a failed call attempt.
- 'Call Answered?': In some MNO's configuration, when an insolvent call attempt is made, before an announcement notifying the subscriber of his/her insolvency status begins playing, a 'Call Connected' signaling message (similar to when the call is actually answered by the B-Party) is sent back to the mobile handset (and therefore made available to the Applet) while other network configurations may play this announcement 'in-band' (without sending a 'Call Connected' signaling message). A given MNO may wish to utilize this indicator to further distinguish which network element (e.g. IN/Billing System) is generating a particular release cause (e.g. Normal Unspecified). To detect a Call Connected message the 'Call Connected Event' (part of the EVENT DOWNLOAD functionality using the SETUP EVENT LIST proactive command) shall be set.

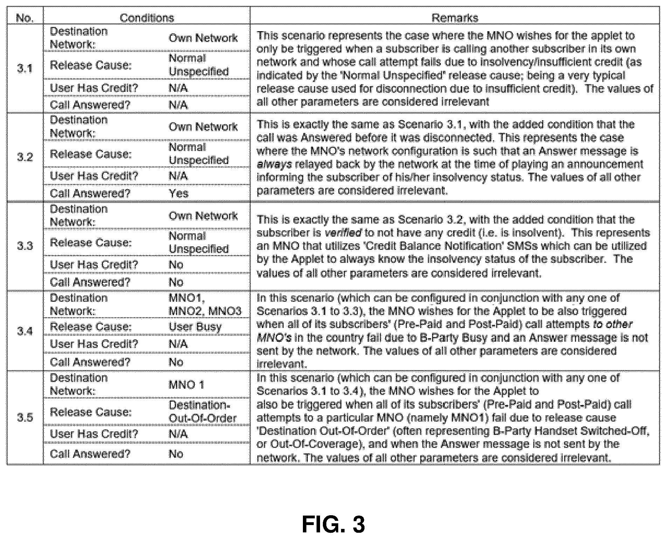

The Table in Fig. 3 Illustrates a few sample scenarios which can be configured in the Applet (based on a given MNOs particular requirements and network configuration) for triggering the Applet. It is critical to note that for a given MNO multiple conditions can be configured (so long as they are not conflicting).

The most basic and typical scenario which a given MNO may wish to have the Applet triggered for, is represented in Row 3.1 of the Table in Fig. 3. In this basic Scenario:
- The MNO's network configuration is such that the 'Normal Unspecified' release cause is utilized only for when a call is disconnected due to subscriber insolvency/insufficient credit
- The MNO only wishes for the menu to be presented when its subscribers are calling other subscribers within its own network
- The values of the 'User has credit', 'Was Call Answered', are considered irrelevant as the MNO is confident that the 'Normal Unspecified' release cause only occurs in response to calls failing due to insolvency/insufficient credit

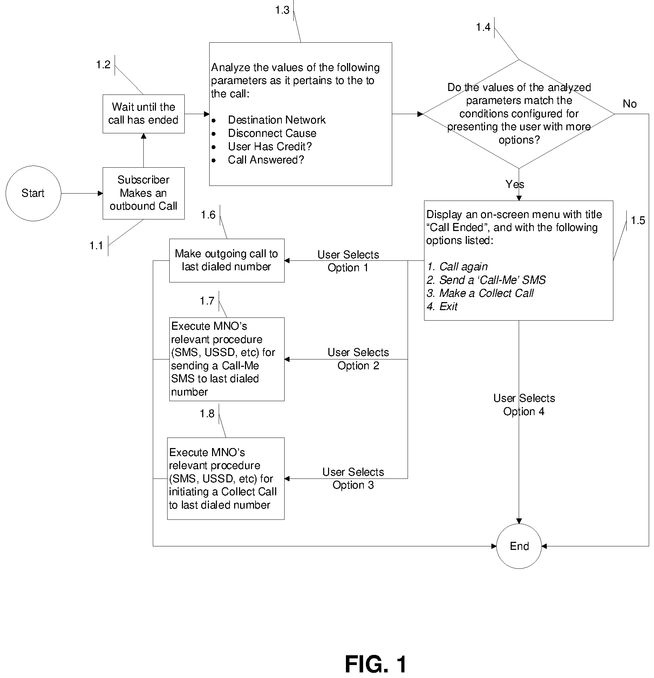

With the MNO's requirements/trigger conditions configured, the Applet will function as follows:
- Step 1.1 in Fig. 1: The Applet will be triggered by an outgoing call attempt (using the CALL CONTROL function)
- Step 1.2 in Fig. 1: The Applet will wait until the call has ended (when the 'Call Disconnected Event' has been triggered
- Step 1.3 in Fig. 1: The Applet will analyze the values of the above-mentioned parameters (related to the call that just ended) against the values (of the same parameters) configured within the Applet
- Steps 1.4 to 1.5 in Fig. 1: If the Parameter values match the conditions configured in the Applet for presenting the user with further options, an on- screen menu (using the SELECT ITEM proactive command) with the following options will be presented:
   ▪ Call again
   ▪ Send a 'Call-Me' SMS
   ▪ Make a Collect Call
   ▪ Exit
- Step 1.6 in Fig.1: If the subscriber chooses the 'Call again' option, the applet will automatically initiate an outgoing call to the same (last dialed and failed) number (using the SET UP CALL proactive command)
- Step 1.7 in Fig.1: If the subscriber chooses the 'Send a Call-Me SMS' or 'Make a Collect Call' option, the Applet will automatically execute the MNO's relevant procedure (SMS, USSD, etc.) for sending a 'Call-Me' SMS or making a Collect Call to the same (last dialed and failed) number

### - Method 2: Manual launching of the Applet from SIM Menu:

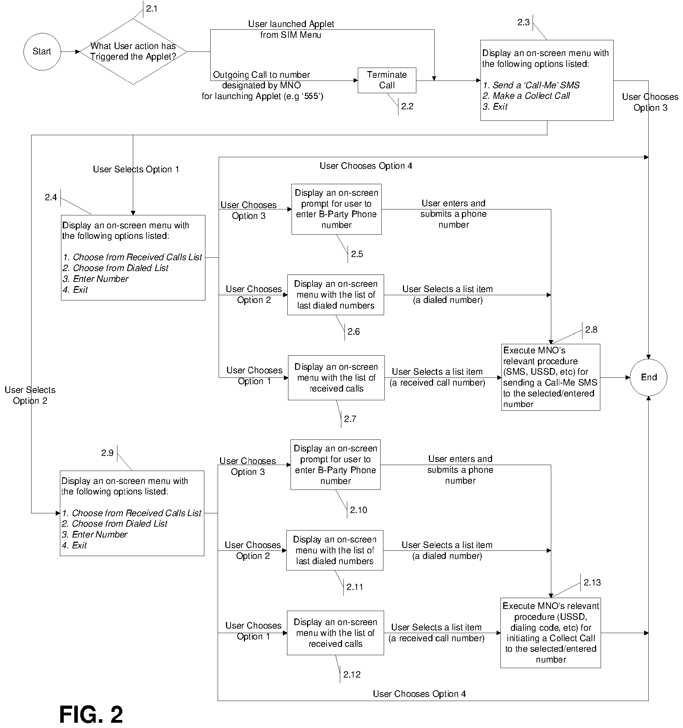

Steps 2.1 and 2.3 in Fig. 2: Any STK Applet that an MNO provides to its subscribers is available to be launched from the SIM menu which all mobile handsets provide access to.

### - Method 3: Dialing a number designated to Applet Launch

The MNO can designate a number that has no destination or functionality associated with it (e.g. 555) to be used for launching the Applet:
- Steps 2.1 to 2.3 in Fig. 2: Once such a number has been established and provisioned in the Applet, subscribers can place a call to the designated number which will trigger the Applet to terminate the call (as it does not represent a valid destination), and instead provides them with the Call Completion Options menu.. This is achieved using the CALL CONTROL function which will in turn trigger the SET UP MENU proactive command.
- Step 2.4 in Fig. 2: If 'Send a Call-Me SMS' option is selected by the user from the SIM Applications menu, he/she will be provided with 3 options for determining the recipient (B-Party) of the 'Call-Me' SMS:
- Step 2.5 in Fig. 2: By choosing from a list of last numbers from which calls were received (captured using the MT Call Event function and stored in the SIM program memory)
- Step 2.6 in Fig. 2: By choosing from a list of numbers last dialed by the subscriber (captured using the CALL CONTROL function and stored in the SIM program memory)
- Step 2.7 in Fig. 2: By manually entering a phone number using the GET INPUT proactive command)
- Step 2.8 in Fig. 2: All 3 options (a, b and c) having prompted the user to either select or enter a phone number will in turn trigger the Applet to execute the MNO's relevant procedure (SMS, USSD, etc.) for sending a 'Call-Me' SMS to the selected/entered number
- Steps 2.9-2.13 in Fig. 2 will function very similar to steps 2.5-2.8 (detailed above) however for initiating a Collect Call.

Many MNOs utilize USSD strings also containing a B-Party number for other Value-Added functions, such as Barring a B-Party number, Adding a B-Party number to a 'Collect-Call White list', performing Money/Credit Transfer, Requesting a 'Nano-loan'/'Airtime Assistance', etc. The mechanisms described in the present invention for making the process of initiating a 'Call-Me' SMS or a Collect Call (e.g. choosing from a list of received and last dialed numbers, automatic prompting of the user based on conditions captured following a failed outgoing call attempt, etc) to avoid the tedious process of manually typing the required commands and phone numbers, can also be used for facilitating these other Value-Added functions due to the extreme similarity in their usage to the present invention.

Within the menu presenting the list of Call-Completion Options, a "Help" item can also be added which when chosen can trigger an MO call (using the SET UP CALL proactive command) to an IVR that will guide the subscriber through each option. This would be especially helpful in environments with a high illiteracy rate.

*Enhancement 2: Converting SMS-Based Call-Completion Notifications (e.g 'Call-Me' SMS and Availability Notification) to an IVR Call-Based notification system with ability for prompting the subscriber for automatic call-back:*

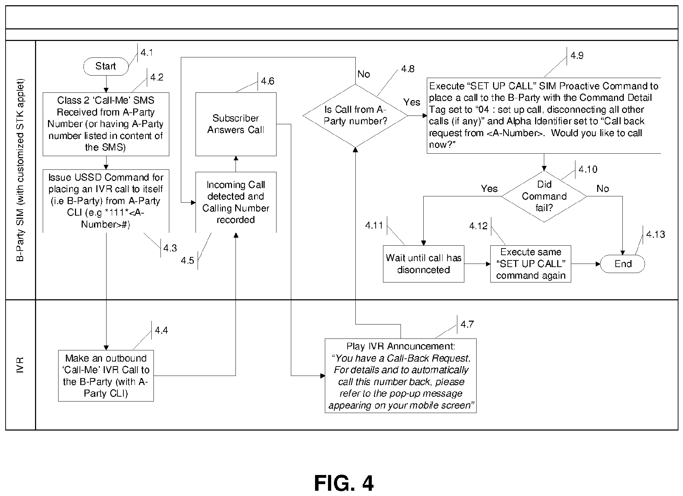

Fig. 4 is an exemplary embodiment of how this enhancement can be made by:
- Utilizing a customized STK Applet installed on the SIM cards
- Converting the Call Completion SMS (which in the case of Fig.4, the Call-Me SMS has been illustrated) to a Class 2 SMS making it visible to and understandable by the customized STK Applet, but invisible to the subscriber (as intended)
- Configuring the USSD gateway to accept a USSD string from a mobile in the format of ^{∗}111^{∗}<Number># which will trigger an outbound IVR call to the number having issued the USSD command and the CLI of the call set to <Number>

Alternative methods of achieving the desired results using ISDN Sub-Addressing or the utilizing of zeros in the prefix of the CLI of the outbound IVR call have been discussed above, and will not be detailed in this particular exemplary embodiment.

The following should be noted when reviewing the embodiment depicted in Fig. 4:
- Step 4.3: Depending on the particular configuration of the MNO's network, The SEND SS or SEND USSD proactive commands can be used to issue the needed USSD command for triggering the IVR call
- Step 4.5: It is during this step (where the STK Applet has been triggered via an 'MT Call Event') which in addition to recording the Address (i.e CLI) field of the MT call, the Sub-Address can also be captured and recorded
- Step 4.8: If the other alternative methods of utilizing ISDN Sub-Addressing or the utilizing of zeros in the prefix of the CLI of the outbound IVR call were to be used, it is at this point that the STK applet would analyze the Address (i.e CLI) and/or the Sub-Address (having been recorded in Step 4.5) to decide whether the incoming call is indeed an IVR call and related to which particular Call-Completion service in order to decide what message to present the subscriber when issuing the SET UP CALL proactive command.
- Step 4.10: Certain handsets (a very small subset) do not support having the SET UP CALL command issued while another call (in this case the IVR call) is currently in progress. The check (of the command result) in this step will reveal if the particular handset having received the call is such a handset. In case this limitation exists, the STK Applet shall wait until the IVR call has ended (by setting the CALL DISCONNECTED event and waiting for its trigger) and will issue the same SETUP CALL COMMAND at that time. From the users perspective, they will observe a Pop-up message offering the option to call the A-Party back appearing immediately after the IVR call has disconnected (automatically after playing its message) at which point he/she can choose to have the handset automatically dial A-Party number. A particular MNO may in fact prefer to implement this method (of issuing the SET UP CALL command and prompting the subscriber to call the A-Party once the call has disconnected) uniformly for all SIMs. This is a very trivial change to the STK Applet and instead of triggering the SET UP CALL command upon the Call Connected Event, it would be programmed to trigger it on the Call Disconnected Event.

Some optional methods that can be used to augment the processes described as a part of the present invention are as follows:
- A small subset of Mobile Handsets may not support all the STK functions required for the methods described above. As an example, some mobile handsets my not support: MT Call Event, Call Connected Event, Call Disconnected Event, or the SET UP CALL proactive command. If the subscriber of such mobile handset receives a Call Me IVR Call instructing him/her to " ..*.please refer to the pop-up message appearing on your mobile screen"* when in fact the mobile handset has not provided such a pop-up due to the mentioned limitations, this can be a suboptimal user experience requiring an intelligent remedy. One way to improve the experience of the users possessing handsets with the mentioned limitation is as follows:
   o The outbound IVR profile shall be configured with 2 messages:
      ▪ *"You have a call back request from <A Number*> ". This will be the default announcement that will be played
      ▪ *"You have a Call-Back Request. For details and to automatically call this number back, please refer to the pop-up message appearing on your mobile screen".* This message will be played by the IVR if immediately after the call is answered, the IVR receives a particular DTMF (Dual Tone Multi Frequency) Tone (e.g "5")
   o The STK Applet will be programmed to issue the required DTMF (e.g "5") if the handset supports all the required STK commands for presenting the user with a pop-up for automatic call back. The STK Applet can easily evaluate this using the handset's Terminal Profile which is always available to the STK applet.
   o If the STK evaluates (through the handset's Terminal Profile) that the handset supports the mentioned commands, it will immediately issue the DTMF tone once the IVR call is detected and answered, resulting in the playback of announcement 2 above
   o If however, the STK evaluates (through the handset's Terminal Profile) that the handset does not support the mentioned commands, it will not issue the DTMF tone and the IVR will by default play the first announcement (which does not offer the option for automatic call back)

As mentioned earlier in this document, the utility of the present invention can be quite vast and not limited to the examples and embodiments outlined in this document. Two additional utilities that the present invention can be used for (in brief) are as follows:
- *Delivering an IVR-based Availability Notification service even if the MNO does not have an MCN platform deployed in its core network. Using STK, this can be done in 2 ways:*
   o Direct Peer-to-Peer STK communication using Class 2 SMS:
      - The A-Party (who attempted to call the B-Party but the call attempt failed due to B-Party unavailability) SIM's STK Applet will be configured to prompt the user if he/she would like to be notified once the B-Party become available again. The detection criteria would be very similar to scenario 3.5 in Fig. 3. The prompt can be done via a simple Pop-up using the DISPLAY TEXT proactive STK command.
      - If the A-Party chooses "Yes" (or "Accept", "OK", etc depending on the handset), the STK applet will send a Class 2 SMS to the B-Party but requesting a Delivery Report for the SMS
      - Once the B-Party handset become available again (i.e comes back into coverage or is switched on), the Class 2 SMS will be received by its SIM (invisible to the subscriber) and a Delivery Report will automatically be sent to the A-Party SIM
      - Once the Delivery Report is received by the A-Party SIM, the STK applet can perform the same functions as those described earlier for the Call-Me SMS to:
         ▪ Request an IVR Call (with the Availability Notification profile) from the B-Party CLI Upon receiving the call and it being answered, issuing the SET UP CALL command to prompt the A-Party subscriber to initiate an automatic Call to the B-Party
   o Indirect Peer-to-Peer STK communication using USSD:
      - The A-Party (who attempted to call the B-Party but the call attempt failed due to B-Party unavailability) STK Applet will be configured to prompt the user if he/she would like to be notified once the B-Party become available again. The detection criteria would be very similar to scenario 3.5 in Fig. 3. The prompt can be done via a simple Pop-up using the DISPLAY TEXT proactive STK command.
      - If the A-Party chooses "Yes" (or "Accept", "OK", etc depending on the handset), the STK applet will issue a USSD string (e.g ^{∗}333^{∗}<B-Party Number>) which will trigger the USSD Gateway to Send a Class 2 SMS to the B-Party SIM informing it that the A-Party SIM would like to be notified once it becomes available again
      - Once the B-Party handset become available again (i.e comes back into coverage or is switched on), the Class 2 SMS will be received by the SIM (invisible to the subscriber) and will trigger its STK applet to issue another USSD string (e.g ^{∗}444^{∗}<A-Party Number>) which will trigger the USSD Gateway to Send a Class 2 SMS to the A-Party SIM informing it that the B-Party is now available. From there the STK applet can perform the same functions as those described earlier for the Call-Me SMS to:
      - Request an IVR Call (with the Availability Notification profile) from the B-Party CLI
      - Upon receiving the Call and it being answered, issuing the SET UP CALL command to prompt the A-Party subscriber to initiate an automatic Call to the B-Party

The scenarios provided thus far all share the common procedure of an incoming IVR call triggering a prompt for automatic call-back. This same procedure can be slightly modified to serve other value-added functions. One such function is as follows:
- Most MNOs offer their subscribers a Credit Transfer facility. This allows family and friend to transfer Airtime credit into each other's prepaid accounts. This is usually done via USSD and with a format similar to ^{∗}555^{∗}<B-Party Number><Transfer Amount>#. Aside from the extremely long and tedious USSD string which needs to be entered, this facility suffers from one major flaw: Typically a subscriber is in need of credit when he/she is insolvent (out of credit). If this is the case, it is not a simple and intuitive task for that subscriber to be able to ask another subscriber for Credit Transfer given that he/she cannot call or SMS the other subscriber. One intuitive and simple way to solve this limitation is to add "Ask for Credit" as one of the menu items that is presented to subscribers upon their call failing due to insufficient funds (as per Fig.1 and in addition to "Send Call Me SMS" and "Make a Collect Call"). If the subscriber chooses this option, he/she will also be prompted to enter the amount of credit they wish to ask the B-Party for. From there, a very similar mechanism as has been described in detail in previous sections of this document for triggering an IVR call to the B-Party shall be presented. Once answered, instead of a SET UP CALL command being issued to prompt the B-Party subscriber to call the A-party back, a Pop-up message using the DISPLAY TEXT proactive command will be presented asking the subscriber if they accept the credit transfer request from the A-Party. Upon his/her confirmation, the relevant USSD string (e.g ^{∗}555^{∗}<B-Party Number><Transfer Amount>#) will be automatically issued by the STK applet and the credit will be transferred to the A-Party.

The foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

With respect to the above description, it is to be realized that the optimum relationships for the parts of the invention in regard to size, shape, form, materials, function and manner of operation, assembly and use are deemed readily apparent and obvious to those skilled in the art, and all equivalent relationships to those illustrated in the drawings and described in the specification are intended to be encompassed by the present invention.

## Claims

1. A method **characterized by** the utilization of a Subscriber Identity Module (SIM) Tool Kit (STK) Applet installed on the SIM card for automatically detecting a failed Mobile Originating (MO) call attempt due to subscriber insolvency (1.1, 1.2, 1.3, 1.4) and prompting the calling and insolvent subscriber on the screen of the Mobile Handset with a menu of relevant Call-Completion options which the subscriber can execute with a single click or touch (1.5) by provisioning the STK Applet to:
utilize the 'Call Control' STK function to register and record the number which the subscriber attempted to call (1.1),
utilize the 'Call Connected' and 'Call Disconnected' STK events to recognize that the call ended before it was connected (1.2, 1.3, 1.4),
analyze the 'Cause' data object provided by the 'Call Disconnected' STK Event to determine that the Call failure was due to insolvency (1.3, 1.4),
utilize the 'Select Item' proactive STK command to present the subscriber with a list of call completion options relevant to insolvency (1.5).

2. A method **characterized by** the utilization of an STK Applet installed on the SIM card for automatically detecting a failed Mobile Originating call attempt due to B-Party which is synonymous with 'called-party' unavailability due to handset switched- off or out-of-coverage (1.1, 1.2, 1.3, 1.4) and prompting the calling subscriber on the screen of the Mobile Handset with a menu of relevant Call-Completion options which the subscriber can execute with a single click or touch (1.5) by provisioning the STK Applet to:
utilize the 'Call Control' STK function to detect a Mobile Originating (MO) call and to record the number which the subscriber attempted to call (1.1),
utilize the 'Call Connected' and 'Call Disconnected' STK events to recognize that the call ended before it was successfully connected (1.2, 1.3, 1.4),
analyze the 'Cause' data object provided by the 'Call Disconnected' STK Event to determine that the Call failure was due to B-Party unavailability (1.3, 1.4),
utilize the ' Select Item' proactive STK command to present the subscriber with a list of call completion options relevant to B-Party unavailability (1.5).

3. A method for enhancing and stimulating the usage of a Mobile Network Operator's (MNO) Call-Completion services by eliminating the need for subscribers to have prior knowledge of these services, the specific methods required for utilizing them, or issuing any USSD or SMS-based commands including a B-Party number for initiating these services, **characterized by** the utilization of an STK Applet installed on the SIM cards in the network, by performing the methods of Claim 1 or Claim 2 (1.1, 1.2, 1.3, 1.4, 1.5), followed by the STK Applet automatically issuing the relevant USSD or SMS commands containing the recorded called number for triggering the selected Call Completion service based on the subscriber's selected menu option (1.6, 1.7, 1.8).

## Patentansprüche

1. Ein Verfahren, das durch die Verwendung eines auf der SIM-Karte (Subscriber Identity Module) installierten Tool Kit (STK)-Applets zur automatischen Erkennung eines fehlgeschlagenen MO-Anrufversuchs aufgrund einer Insolvenz des Abonnenten gekennzeichnet ist (1.1, 1.2, 1.3, 1,4), um dem anrufenden und insolventen Teilnehmer auf dem Bildschirm des Mobiltelefons ein Menü mit relevanten Optionen für die Weitervermittlung zur Verfügung zu stellen, die der Teilnehmer mit einem einzigen Klick oder einer Berührung (1.5) ausführen kann, wobei das STK-Applet Folgendes ermöglicht:
Verwendung der STK-Funktion 'Anrufsteuerung', um die Nummer zu registrieren und aufzuzeichnen, die der Teilnehmer beim Anrufversuch gewählt hat (1.1),
Verwendung der STK-Ereignisse 'Anruf verbunden' und 'Anruf unterbrochen', um zu erkennen, ob der Anruf beendet wurde, bevor er vermittelt wurde (1.2, 1.3, 1,4),
Analysierung des 'Ursachen'-Datenobjekts, das vom STK-Ereignis 'Anruf unterbrochen' bereitgestellt wurde, um festzustellen, ob das Anrufversagen auf Insolvenz zurückzuführen war (1.3, 1.4),
Verwendung des proaktiven STK-Befehls 'Element auswählen', um dem Teilnehmer eine Liste der Optionen für die Weitervermittlung zu präsentieren, die für die Insolvenz relevant sind (1.5).

2. Ein Verfahren, das durch die Verwendung eines auf der SIM-Karte installierten STK-Applets zur automatischen Erkennung eines fehlgeschlagenen MO-Anrufversuchs aufgrund der Nichtverfügbarkeit einer angerufenen B- Partei gekennzeichnet ist, die auf ein ausgeschaltetes oder außerhalb der Reichweite befindliches Mobiltelefon zurückzuführen ist (1.1, 1.2, 1.3, 1.4), um dem anrufenden Teilnehmer auf dem Bildschirm des Mobiltelefons ein Menü mit relevanten Optionen für die Weitervermittlung zur Verfügung zu stellen, die der Teilnehmer mit einem einzigen Klick oder einer Berührung (1.5) ausführen kann, wobei das STK-Applet Folgendes ermöglicht:
Verwendung der STK-Funktion 'Anrufsteuerung', um einen MO-Anruf zu erkennen und die Nummer aufzuzeichnen, die der Teilnehmer beim Anrufversuch gewählt hat (1.1),
Verwendung der STK-Ereignisse 'Anruf verbunden' und 'Anruf unterbrochen', um zu erkennen, ob der Anruf beendet wurde, bevor er erfolgreich vermittelt wurde (1.2, 1.3, 1.4),
Analysierung des 'Ursachen'-Datenobjekts, das vom STK-Ereignis 'Anruf unterbrochen' bereitgestellt wurde, um zu bestimmen, ob das Anrufversagen auf die Nichtverfügbarkeit der B-Partei zurückzuführen war (1.3, 1.4),
Verwendung des proaktiven STK-Befehls 'Element auswählen', um dem Teilnehmer eine Liste der Optionen für die Weitervermittlung zu präsentieren, die für die Nichtverfügbarkeit der B-Partei relevant sind (1.5).

3. Eine Methode zur Verbesserung und Anregung der Nutzung der Weitervermittlungsdienste eines Mobilfunkbetreibers (MNO), bei der die Teilnehmer keine Vorkenntnisse über diese Dienste und die spezifischen Methoden, die für deren Nutzung erforderlich sind, oder die Ausgabe von USSD- oder SMSbasierten Befehlen haben müssen, einschließlich einer B-Partei-Nummer zur Initiierung dieser Dienste, die durch die Verwendung eines auf den SIM-Karten im Netzwerk installierten STK-Applets **gekennzeichnet ist, durch** die Ausführung der Verfahren nach Anspruch 1 oder Anspruch 2 (1.1, 1.2, 1.3, 1.4, 1.5), wobei das STK-Applet automatisch die entsprechenden USSD- oder SMS-Befehle ausgibt, welche die aufgezeichnete angerufene Nummer enthalten, um den ausgewählten Weitervermittlungsdienst auf Basis der gewählten Menüoption des Teilnehmers (1.6, 1.7, 1.8) auszulösen.

## Revendications

1. Procédé **caractérisé par** l'utilisation d'un applet boîte à outils (STK) de module d'identification de l'abonné (SIM) installé sur la carte SIM pour la détection automatique d'une tentative d'appel provenant d'un appareil mobile (MO) ayant échoué du fait de l'insolvabilité de l'abonné (1.1, 1.2, 1.3, 1.4) et l'incitation de l'abonné appelant et insolvable sur l'écran du téléphone mobile avec un menu d'options d'établissement de communication que l'abonné peut exécuter d'un simple clic ou pression (1.5) par la fourniture de l'applet STK pour :
utiliser la fonction STK « Commande d'Appel » pour enregistrer le numéro que l'abonné a essayé d'appeler (1.1),
utiliser les événements STK « Appel Connecté » et « Appel Déconnecté » pour reconnaître que l'appel s'est achevé avant qu'il ne soit connecté (1.2, 1.3, 1.4),
analyser l'objet des données de « Cause » fournies par l'événement STK « Appel Déconnecté » pour déterminer que l'échec de l'appel était dû à une insolvabilité (1.3, 1.4),
utiliser la commande STK proactive « Sélectionner Élément » pour présenter à l'abonné une liste d'options d'établissement de communication pertinentes pour l'insolvabilité (1.5).

2. Procédé **caractérisé par** l'utilisation d'un applet STK installé sur la carte SIM pour la détection automatique d'une tentative d'appel provenant d'un appareil mobile ayant échoué du fait d'une partie B qui est synonyme d'indisponibilité d'une « partie appelée » du fait d'un portable éteint ou hors de la zone de couverture (1.1, 1.2, 1.3, 1.4) et l'incitation de l'abonné appelant sur l'écran du téléphone mobile avec un menu d'options pertinentes d'établissement de communication pertinentes que l'abonné peut exécuter d'un simple clic ou pression (1.5) par la fourniture de l'applet STK pour :
utiliser la fonction STK « Commande d'Appel » pour détecter un appel provenant d'un Mobile (MO) et pour enregistrer le numéro que l'abonné a essayé d'appeler (1.1),
utiliser les événements STK « Appel Connecté » et « Appel Déconnecté » pour reconnaître que l'appel s'est achevé avant qu'il ne soit connecté avec succès (1.2, 1.3, 1.4),
analyser l'objet de données de « Cause » fournies par l'événement STK « Appel Déconnecté » pour déterminer que l'échec de l'appel était dû à l'indisponibilité de la partie B (1.3, 1.4),
utiliser la commande STK proactive « Sélectionner Élément » pour présenter à l'abonné une liste d'options d'établissement de communication pertinentes pour l'indisponibilité d'une partie B (1.5).

3. Procédé pour l'amélioration et la stimulation de l'utilisation d'un service d'établissement de communication d'un opérateur de réseau mobile (MNO) par l'élimination du besoin pour les abonnés d'avoir une connaissance préalable de ces services, des procédés spécifiques requis pour les utiliser, ou de l'émission d'une quelconque commande USSD ou sur base de SMS comprenant un numéro de partie B pour l'initiation de ces services, **caractérisé par** l'utilisation d'un applet STK installé sur les cartes SIM dans le réseau, par la mise en œuvre des procédés selon la revendication 1 ou la revendication 2 (1.1, 1.2, 1.3, 1.4, 1.5), suivis par l'émission automatique par l'applet STK des commandes USSD ou SMS contenant le numéro appelé enregistré pour le déclenchement du service d'établissement de communication sélectionné sur base de l'option de menu sélectionnée par l'abonné (1.6, 1.7, 1.8).
